# EUROPÄISCHE PATENTSCHRIFT

(11) **EP 1 141 655 B1**
(45) Veröffentlichungstag und Bekanntmachung des Hinweises auf die Patenterteilung: **27.12.2006**
(21) Anmeldenummer: 00972693.6
(22) Anmeldetag: 06.10.2000
(51) Int. Cl.: G01C 15/00

(54) **ABSTECKVORRICHTUNG**
STAKING OUT DEVICE
DISPOSITIF DE BALISAGE

(30) Priorität: 09.10.1999 DE 19948705
(43) Veröffentlichungstag der Anmeldung: 10.10.2001
(73) Patentinhaber: Trimble Jena GmbH, 07745 Jena (DE)
(72) Erfinder: DONATH, Bernd, 07747 Jena (DE); FEIST, Wieland, 07743 Jena (DE); GRÄSSER, Christian, 07646 Stadtroda (DE); LAABS, Steffen, 07743 Jena (DE); MONZ, Ludwin-Heinz, 89081 Ulm (DE)
(74) Vertreter: Geyer, Fehners & Partner
(86) Internationale Anmeldenummer: PCT/EP2000/009796
(87) Internationale Veröffentlichungsnummer: WO 2001/027560

(56) Entgegenhaltungen:
- DE-A- 3 839 797
- DE-U- 9 016 633
- US-A- 5 739 785
- US-A- 5 903 235

## Beschreibung

### Gebiet der Erfindung

Die Erfindung bezieht sich auf eine Absteckvorrichtung für Tachymeter, umfassend einen auf einen Zielpunkt im Umfeld eines abzusteckenden Geländepunktes lotrecht aufsetzbaren Stab, einen an dem Stab angeordneten Reflektor zur tachymetrischen Erfassung des Zielpunktes und Mittel zur Kommunikation zwischen Stab und Tachymeter.

### Stand der Technik

Die Verwendung derartiger Absteckvorrichtungen zur Absteckung und Ausmessung von Geländepunkten zusammen mit Tachymetern ist im Stand der Technik bekannt. Im Zuge der Weiterentwicklung elektronischer Tachymeter jedoch gewinnt eine schnelle und effiziente Absteckung von Geländepunkten, bei der von einer bekannten Position ausgehend projektierte Punkte in eine Örtlichkeit bzw. ein Gelände übertragen werden, zunehmend an Bedeutung.

Zur Absteckung eines Geländepunktes wird die Zielachse eines Tachymeters in eine Vertikalebene gebracht, die durch die Lotrichtung im Tachymeterstandpunkt und die Richtung zu dem abzusteckenden Geländepunkt bestimmt wird. In diese Vertikalebene wird ein Reflektor eingewiesen und in der Umgebung eines abzusteckenden Geländepunktes möglichst nahe zu diesem aufgestellt. In der nachfolgenden Beschreibung wird der Aufstellungsort des Reflektors als Zielpunkt bezeichnet.

Vom Tachymeterstandpunkt wird dann die Strecke bis zum Reflektorstandpunkt gemessen, woraus mit Hilfe der bekannten Sollage des abzusteckenden Geländepunktes auf den Zielpunkt bezogene Lagekorrekturinformationen gewonnen werden. Anhand der Lagekorrekturinformationen wird vom Zielpunkt ausgehend der abzusteckende Geländepunkt manuell abgemessen und markiert.

Insbesondere bei größeren Entfernungen zwischen dem Tachymeter und dem Reflektor ist die Einweisung des Reflektors wie auch die Umsetzung der Lagekorrekturinformationen schwierig auszuführen, da die Lagekorrekturinformationen am Tachymeterstandpunkt erhalten werden, die Umsetzung in das Gelände jedoch am Zielpunkt stattfindet.

Zur Erleichterung der Informationsübertragung wurde in der JP-A-4-93714 vorgeschlagen, zwischen dem Tachymeter und einer am Zielpunkt aufzustellenden, mit einem Reflektor versehenen Absteckvorrichtung eine kabellose Datenfernübertragung einzurichten, wozu die Absteckvorrichtung mit einer entsprechenden Empfangsvorrichtung sowie einem Display zur Anzeige der übertragenen Informationen versehen ist. Jedoch muß bei der bekannten Absteckvorrichtung weiterhin der abzusteckende Geländepunkt von dem Zielpunkt aus manuell angemessen werden. Dieser Vorgang ist, wenn er mit befriedigender Genauigkeit ausgeführt werden soll, verhältnismäßig zeitaufwendig.

Mit zunehmenden Genauigkeitsanforderungen wächst der zeitliche und apparative Aufwand zur Absteckung eines Geländepunktes erheblich an. In der Praxis wird unterschieden zwischen Grobabsteckungen, mit denen eine Genauigkeit von etwa 3 bis 10 cm erreicht wird, Feinabsteckungen mittlerer Genauigkeit, mit denen sich Toleranzen von 5 bis 10 mm erreichen lassen, sowie genaueren Feinabsteckungen, die Genauigkeiten von 1 bis 3 mm erlauben.

Zur Übertragung eines projektierten Punktes in eine Örtlichkeit bzw. ein Gelände wird zunächst eine Grobabsteckung vorgenommen, bei der von einem Festpunkt ausgehend als erstes die Richtung durch das Tachymeter vorgegeben wird. Dabei erfolgt die Einweisung einer die Absteckvorrichtung mit dem Reflektor tragenden Person visuell durch Winken. Die Einweisung in die Entfernung erfolgt durch stufenweises Messen und Übermittlung der einzuschreitenden Entfernung an die Bedienperson der Absteckvorrichtung. Dieser Vorgang wird iterativ so lange wiederholt, bis der Ziel punkt mit der genannten Toleranz der Grobabsteckung im Umfeld des abzusteckenden Geländepunktes liegt.

Zur genaueren Bestimmung eines abzusteckenden Geländepunktes, d. h. für eine Feinabsteckung, wird die Absteckvorrichtung auf den bei der Grobabsteckung ermittelten Zielpunkt exakt aufgehalten. Durch eine genaue Anzielung und Messung mit dem Tachymeter werden die Abweichungen des abzusteckenden Geländepunktes von dem Zielpunkt ermittelt, wobei die Werte dann zunächst am Aufstellungsort des Tachymeters vorliegen. Daraufhin werden entsprechende Lagekorrekturinformationen für den abzusteckenden Geländepunkt an den Aufstellungsort der Absteckvorrichtung übertragen und dort von der Bedienperson manuell am Boden abgemessen, woraufhin der gefundene, abzusteckende Geländepunkt markiert wird. Gegebenenfalls erfolgt dann noch eine Kontrollmessung mit der auf den abzusteckenden Geländepunkt aufgehaltenen Absteckvorrichtung.

Diesbezüglich ist aus DE 9016633 U eine Vorrichtung zur Durchführung von Entfernungs- und Koordinatenmessungen bekannt mit einem Meßinstrument, das einen Meßstrahl aussendet, mit einer Prismen-Meßlatte, die zur Reflektierung des Meßstrahles zurück zu dem Meßinstrument plazierbar ist und mit einer Rechenvorrichtung zum Vergleich der Koordinaten eines voreingestellten Koordinatenpunktes mit den mittels der Prismen-Meßlatte gemessenen Koordinaten. Dabei ist das Meßinstrument mit einem Funk-Übertragungsgerät verbunden, und an der Prismen-Meßlatte ist ein Empfänger sowie ein visuell wahrnehmbares Anzeigeelement vorhanden, um Führungskommandos vom Meßinstrument zu der Prismen-Meßlatte übertragen sowie ein Richtungssignal anzeigen zu können.

Weiterhin ist aus US-A-5,793,785 eine Einrichtung zur Markierung von Geländepunkten bekannt, bei der Geländepunkte mit einem in seiner Länge verstellbaren Maßstab, der mit einem Winkelgeber gekoppelt ist, abgesteckt werden. Auch hiermit sind die genannten Nachteile des Standes der Technik nicht aufgehoben, und die Absteckung erfolgt immer noch in einer zeitaufwendigen Verfahrensweise. Diese Einrichtung ist außerdem auf die Einbeziehung eines Satellite Positioning Systems (SPS) angewiesen.

### Beschreibung der Erfindung

Der Erfindung liegt ausgehend davon die Aufgabe zugrunde, eine Absteckvorrichtung der eingangs beschriebenen Art dahingehend weiterzuentwickeln, daß abzusteckende Geländepunkte innerhalb kürzerer Zeit und mit hoher Genauigkeit ermittelt und markiert werden können.

Diese Aufgabe wird gelöst durch eine Absteckvorrichtung für Tachymeter, umfassend einen auf einen Zielpunkt im Umfeld eines abzusteckenden Geländepunktes lotrecht aufsetzbaren Stab, einen an dem Stab angeordneten Reflektor zur tachymetrischen Erfassung des Zielpunktes, eine Sende- und Empfangseinrichtung zum Austausch von Informationen mit dem Tachymeter, eine Rechenschaltung zur Ermittlung von Positionsabweichungen zwischen Zielpunkt und Geländepunkt und eine Absteckhilfseinrichtung zum Markieren der Position des abzusteckenden Geländepunktes.

Die erfindungsgemäße Absteckvorrichtung erlaubt eine effiziente und genaue Übertragung von projektierten Punkten in ein Gelände, da sich durch eine Vorgehensweise, wie sie bisher für die Grobabsteckung üblich ist, die Genauigkeit einer Feinabsteckung verwirklichen läßt. Durch die positionsgenaue Kennzeichnung des abzusteckenden Geländepunktes wird das zeitaufwendige und fehlerträchtige manuelle Übertragen der Lagekorrekturinformationen vermieden. Damit läßt sich die Zeit, die benötigt wird, um einen projektierten Punkt im Gelände zu finden und abzustecken, erheblich vermindern, ohne daß dies mit Genauigkeitseinbußen verbunden wäre.

In einer vorteilhaften Ausgestaltung der Erfindung wird der abzusteckende Geländepunkt optisch wahrnehmbar markiert, beispielsweise mit Hilfe von Licht. Dies hat den Vorteil, daß von der Bedienperson der Absteckvorrichtung an dem zeitweilig gekennzeichneten Punkt lediglich noch eine dauerhafte Markierung angebracht werden muß, um den Absteckvorgang zu beenden.

Vorzugsweise weist die Absteckhilfsvorrichtung ein Lasergerät mit einem diffraktiven optischem Element zur Erzeugung eines Lichtmusters in Form eines Gitters, eines Punktfeldes oder in Form von konzentrischen Umrissen auf. Hierdurch lassen sich neben der Information über die Lage des abzusteckenden Geländepunktes weitere Informationen gewinnen, beispielsweise über die Einordnung des Geländepunktes in ein Punktraster.

In einer weiteren vorteilhaften Ausgestaltung der Erfindung umfaßt die Absteckhilfseinrichtung einen in wenigstens in zwei Koordinatenrichtungen bewegbaren Laserpointer zur Erzeugung einer punktförmigen Markierung im Gelände. Diese Ausgestaltungsform erlaubt auch größere Abstände zwischen dem Zielpunkt und dem abzusteckenden Geländepunkt, die außerhalb der herkömmlichen Toleranzen der Grobabsteckung liegen, so daß die Einweisung in die Umgebung des abzustekkenden Geländepunktes sowie dessen Bestimmung und Abmarkierung weiter beschleunigt werden kann, ohne das oben erwähnte Genauigkeitsniveau einer genauen Feinabsteckung zu beeinträchtigen.

In einer alternativen Ausgestaltungsform weist die Absteckhilfseinrichtung ein an dem Stab, vorzugsweise in Bodennähe, angeordnetes Sendemodul zur Abstrahlung von Positionswerten, vorzugsweise über modulierte Schall- und/oder elektromagnetische Wellen, und ein manuell verschiebbares Empfangsmodul zum Empfang der Positionswerte und zur Markierung des abzusteckenden Geländepunktes auf. Das Empfangsmodul läßt sich dabei wie eine dreidimensionale Maus von Hand bewegen, wobei dessen Position bzw. ein Referenzpunkt den abzusteckenden Geländepunkt kennzeichnet. Auch in diesem Fall läßt sich ein abzusteckender Geländepunkt von einem Zielpunkt aus ermitteln, der von ersterem weiter entfernt ist, als der herkömmliche Genauigkeitsbereich einer Grobabsteckung, so daß der gesamte Absteckvorgang beschleunigt durchgeführt werden kann.

Vorzugsweise weist das Empfängermodul einen Ultraschallsender zum Orten des abzusteckenden Geländepunktes auf, wozu ein Referenzpunkt an dem Empfängermodul mit der Abbildung des abzusteckenden Geländepunktes in Übereinstimmung gebracht wird. Weiterhin ist eine Einrichtung zur Übertragung der örtlichen Lage des Referenzpunktes des Empfängermoduls in eine dauerhafte Markierung im Gelände vorgesehen. Dies erlaubt eine effiziente Einhandbedienung zur Positionierung und Abmarkierung, so daß die andere Hand einer Bedienperson zum Halten der Absteckvorrichtung bzw. des Stabes mit dem Reflektor frei bleibt.

Eine besonders einfache Ausgestaltung und Handhabung des Empfangsmoduls ergibt sich dann, wenn für die Anbringung der Markierung im Gelände an dem Empfangsmodul ein Farbpointer vorgesehen ist, mit dem an dem abzusteckenden Punkt im Gelände eine bleibende farbliche Kennzeichnung vorgenommen werden kann.

Zur Ermöglichung eines günstigen, raumsparenden Transport- und Lagerverhaltens ist die Sende- und Empfangseinheit lösbar an den Träger angekoppelt. Da diese in der Regel empfindliche elektronische Bauelemente enthält, kann sie von dem Stab getrennt und besonders geschützt transportiert und aufbewahrt werden. Überdies wird bei teleskopierbaren Stäben eine bedarfsgerechte Anordnung in bezug auf die Höhe ermöglicht.

In einer weiteren, vorteilhaften Ausgestaltung ist an der Sende- und Empfangseinrichtung ein Display zur Anzeige von Informationen vorgesehen, so daß der abzusteckende Geländepunkt nicht nur im Gelände gekennzeichnet wird, sondern für die Bedienperson an der Absteckvorrichtung auch die entsprechenden Lagekorrekturwerte hinreichend erkennbar sind. Zudem erlaubt das Display eine Kommunikation mit dem Bediener an dem Tachymeter. Dieses ist besonders dann vorteilhaft, wenn der Abstand zwischen dem Tachymeter und der Absteckvorrichtung die Rufdistanz überschreitet.

Vorzugsweise ist an der Sende- und Empfangseinheit weiterhin ein Bedienteil zur Eingabe von Informationen vorgesehen, so daß beispielsweise einem abzusteckenden Geländepunkt zuzuordnende Geländeinformationen bereits während des Absteckvorganges zugeordnet werden können. Die entsprechenden Informationen können über die Sende- und Empfangseinheit an das Tachymeter oder eine weitere Auswertevorrichtung übertragen werden, so daß eine nachträgliche Zuordnung nicht mehr notwendig wird. Überdies kann das Bedienteil auch zur Kommunikation mit der Bedienperson an dem Tachymeter verwendet werden.

In einer weiteren vorteilhaften Ausgestaltung der Erfindung weist der Stab einen bodenseitigen Teil und einen nach oben ausfahrbaren Teil auf, wobei der Reflektor an dem ausfahrbaren Teil angeordnet ist und der ausfahrbare Teil in definierter Lagezuordnung zu dem bodenseitigen Teil geführt ist. Damit läßt sich die Absteckvorrichtung auch in unübersichtlichem Gelände einsetzen. Zudem kann bei größeren Meßentfernungen eine bessere Genauigkeit der Entfernungsmessung erzielt werden.

Vorzugsweise ist die Sende- und Empfangseinheit an dem bodenseitigen Teil angeordnet, so daß bei einem Ausfahren des Teiles mit dem Reflektor diese für die Bedienperson an der Absteckvorrichtung stets in gleicher Höhe gut zugänglich bleiben kann. Um einerseits die Genauigkeit der Messung nicht zu beeinträchtigen und andererseits eine schnelle Handhabung der Absteckvorrichtung zu gewährleisten, sind weiterhin Mittel zur Erfassung der Lagezuordnung zwischen dem ausfahrbaren und dem bodenseitigen Teil vorgesehen, so daß die Lageveränderung des Reflektors zu dem Zielpunkt bei der Bestimmung der Lagekorrekturinformationen mit berücksichtigt wird.

Zur Erleichterung der Grobeinweisung werden an dem Display entsprechende Informationen angezeigt, so daß eine Einweisung selbst dann schnell durchgeführt werden kann, wenn aus der Höhe der Bedienperson kein unmittelbarer Sichtkontakt zu dem Tachymeter besteht.

Für eine besonders einfache Orientierung der Bedienperson der Absteckvorrichtung erfolgt die Richtungseinweisung mit Hilfe eines ein- und ausschaltbaren Positionssignals.

In einer weiteren vorteilhaften Ausgestaltung kann aus den gleichen Gründen auch eine Entfernungsanweisung über das Display erfolgen, wozu bevorzugt ein Blinklicht mit variabler Blinkfrequenz eingesetzt wird, das in Abhängigkeit einer zu großen oder zu geringen Entfernung von dem abzusteckenden Geländepunkt in seiner Blinkfrequenz variiert wird. Durch eine weitere Variation der Blinkfrequenz, die auch ein konstantes Licht bzw. ein/ausgeschaltetes Licht mit einschließt, kann weiterhin angezeigt werden, daß eine richtige Position bzw. ein Sollwert erreicht ist.

### Kurze Beschreibung der Zeichnungen

Die Erfindung wird im folgenden anhand von Ausführungsbeispielen näher erläutert. Die zugehörigen Zeichnungen zeigen in
- Fig.1: ein erstes Ausführungsbeispiel einer Absteckvorrichtung mit einer Absteckhilfseinrichtung zur Generierung einer gitterförmigen Markierung;
- Fig.2: ein zweites Ausführungsbeispiel mit einer Absteckhilfseinrichtung zur Generierung einer Markierung in Form von konzentrischen Kreisen um einen abzusteckenden Geländepunkt;
- Fig.3: ein drittes Ausführungsbeispiel mit einer Absteckhilfseinrichtung in Form eines in zwei Koordinatenrichtungen bewegbaren Laserpointers;
- Fig.4: ein viertes Ausführungsbeispiel mit einer von der Absteckvorrichtung separaten, manuell verschiebbaren Einrichtung zum Abstecken des Geländepunktes;
- Fig.5: ein fünftes Ausführungsbeispiel mit einer Absteckvorrichtung, die einen ausfahrbaren Teil umfaßt.

### Ausführliche Beschreibung der Zeichnungen

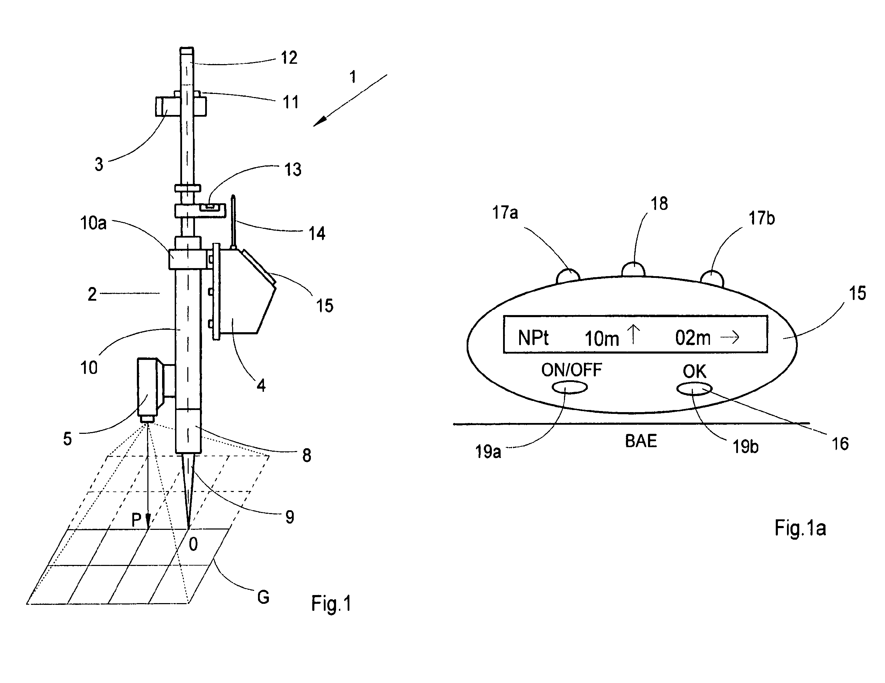

Das erste Ausführungsbeispiel zeigt in Fig.1 eine Absteckvorrichtung 1 mit einem Stab 2, der über einem Zielpunkt O im Umfeld eines projektierten, abzusteckenden Geländepunktes P aufgestellt werden kann und der Anzielung durch ein Tachymeter dient.

Der Stab 2 weist nach diesem ersten Ausführungsbeispiel ein Bodenstück 8 mit einer auf dem Gelände abstützbaren Spitze 9 auf. An das obere Ende des Bodenstückes 8 ist ein Stabteil 10 in definierter Lage angekoppelt, um einen stets gleichen Abstand des Stabteils 10 über dem Abstützpunkt zu gewährleisten.

An dem Stab 2 ist ein Reflektor 3 mit einem Diopter 11 zur Anzielung mit dem Tachymeter vorgesehen. Das obere Ende des Stabes 2 wird durch einen Griff 12 abgeschlossen. Zur lotrechten Ausrichtung der Absteckvorrichtung 1 ist an dem Stab 2 weiterhin eine Dosenlibelle 13 angeordnet.

Des weiteren weist die Absteckvorrichtung 1 nach dem ersten Ausführungsbeispiel eine Sende- und Empfangseinheit 4 sowie eine mit dieser zusammenwirkende Absteckhilfseinrichtung 5 auf, die beide jeweils an dem oberen Stabteil 10 angeordnet sind, wobei die Absteckhilfseinrichtung in genau definierter und bekannter Lage zu dem Reflektor 3 an dem Stab 2 positioniert ist.

Die Sende- und Empfangseinheit 4 dient der Kommunikation mit einer Steuer- und Auswertevorrichtung auf Seiten des Tachymeters. In dem dargestellten Ausführungsbeispiel dient eine Funkstrecke zur zweiseitigen Datenübertragung, wozu an der Sende- und Empfangseinheit 4 eine entsprechende Antenne 14 vorgesehen ist. Zur Unterstützung der Handhabung des Absteckreflektors 1 ist an der Sende- und Empfangseinheit 4 weiterhin ein Display 15 angeordnet, so daß Anweisungen zur Einweisung des Absteckvorrichtung 1 in das nähere Umfeld eines abzusteckenden Geländepunktes P an diesem angezeigt werden können.

Dies ist insbesondere bei größeren Entfernungen vom Tachymeter vorteilhaft, die über die Rufweite hinausreichen. Überdies entfällt hierdurch die Notwendigkeit, separate Funkgeräte zur Einweisung zu verwenden. Vielmehr kann eine solche akustische Funktion zusätzlich in die Sende- und Empfangseinheit 4 integriert werden, wobei dann bevorzugt eine Sprechverbindung in beide Richtungen eingerichtet wird.

Weiterhin sind an der Sende- und Empfangseinheit 4 Eingabevorrichtungen 16 vorgesehen, wie sie beispielhaft in Fig.1a dargestellt sind, die die Eingabe von Zusatzinformationen zu einem abzusteckenden Geländepunkt unmittelbar über die Absteckvorrichtung 1 erlauben, wobei die entsprechenden Daten dann mittels der Sende- und Empfangseinheit 4 an das Tachymeter bzw. eine diesem zugeordnete Auswertevorrichtung übertragen werden. Weiterhin können Informationen über den Zustand der Absteckvorrichtung, z.B. die Betriebsbereitschaft derselben sowie Informationen über den Arbeitsstand, z.B. die Tatsache, daß eine Absteckung beendet worden ist oder noch eine Feinanzielung durchgeführt werden soll, an den Aufstellort des Tachymeters übermittelt werden.

Des weiteren werden zwischen dem Tachymeter und der Absteckvorrichtung 1 Daten betreffend die Absteckwerte, z. B. Lage- und Höhenwerte ausgetauscht, sowie Zusatzinformationen zur Charakterisierung des Meßpunktes oder auch die Strukturierung von Meßpunkten untereinander, z. B. um bestimmte Zugehörigkeiten von Punkten zueinander zu übermitteln. Weiterhin können Richtungsinformationen übertragen werden, die eine Bedienperson an der Absteckvorrichtung über die Richtung, in die ein Meßwert abgesetzt werden soll, unterrichten.

Zur unmittelbaren Übertragung eines projektierten Punktes in das Gelände von einem Zielpunkt O aus weist die Absteckvorrichtung 1 eine Absteckhilfseinrichtung 5 auf, die in dem ersten Ausführungsbeispiel ein Lasergerät mit einem diffraktiven optischen Element zur Erzeugung eines Lichtmusters in Form eines Liniengitters G umfaßt.

Durch dieses Gitter G wird der projektierte, abzusteckende Geländepunkt P in das Gelände projiziert und kann dann ohne weitere zusätzliche Maßnahmen unmittelbar dauerhaft gekennzeichnet werden. Die Projektion des Liniengitters G in das Gelände erfolgt in Abhängigkeit des Aufstellortes, d.h. des Zielpunktes O der Absteckvorrichtung 1. Dieser Ort kann durch Anzielung von Seiten des Tachymeters aus genau bestimmt werden. Anhand der Sollwerte des projektierten, abzusteckenden Geländepunktes P wird auf Seiten des Tachymeters eine Lagekorrekturinformation ermittelt, die anschließend an die Sende- und Empfangseinheit 4 der Absteckvorrichtung 1 übertragen wird. Diese Lagekorrekturwerte werden an dem Display 1 5 der Sende- und Bedieneinheit 4 angezeigt. Überdies erfolgt eine Übermittlung der Korrekturwerte an die Absteckhilfseinrichtung 5, wo diese in geeignete Vorgabewerte für das Lasergerät umgesetzt werden, um den abzusteckenden Geländepunkt P mit Hilfe des Liniengitters G in bezug auf den Zielpunkt O ortsrichtig im Gelände abzubilden.

Alternativ hierzu kann die Ermittlung der Stellgrößen auch bereits in der Sende- und Empfangseinheit 4 erfolgen, sofern diese mit der entsprechenden Rechenschaltung ausgestattet ist.

Durch die gleichzeitige Angabe der Lagekorrekturinformationen an dem Display 15 sowie die Projektion eines entsprechenden, optisch wahrnehmbaren Lichtmusters in das Gelände kann zusätzlich eine Plausibilitätskontrolle hinsichtlich der Lage des abzusteckenden Geländepunktes P vorgenommen werden.

Im folgenden wird nun der Vorgang zum Abstecken eines Geländepunktes im Gelände unter Verwendung der in Fig.1 dargestellten Absteckvorrichtung 1 kurz beschrieben. Hierzu erfolgt zunächst eine Grobabsteckung mit der angestrebt wird, die Absteckvorrichtung 1 mit geringem Aufwand bereits möglichst nahe an den eigentlich abzusteckenden Geländepunkt heranzuführen. Die Einweisung kann hierbei grundsätzlich in der eingangs bereits erläuterten herkömmlichen Art und Weise erfolgen.

Insbesondere bei größeren Entfernungen wird hierzu jedoch vorzugsweise das an der Sende- und Empfangseinheit vorgesehene Display 15 verwendet, das ausschnittsweise in Bild Fig.1a dargestellt ist. Hierbei erfolgt die Vorgabe der Richtung, in die die Absteckvorrichtung 1 zu bewegen ist, über Positionslichter 17a bzw. 17b, deren Leuchten jeweils anzeigt, in welche Richtung die Lage der Absteckvorrichtung 1 zu korrigieren ist.

Die Einweisung in die Entfernung erfolgt über eine weitere Leuchtanzeige 18, deren Blinkfrequenz in Abhängigkeit des Abstandes von dem abzusteckenden Geländepunkt verändert wird. Bei der in Fig.1 dargestellten Ausführungsform wird ein langsameres Blinken dazu verwendet, um die Absteckvorrichtung 1 weiter weg zu dirigieren, während ein schnelleres Blinken zu einem Annähern auffordert. Das Erreichen des abzusteckenden Geländepunktes bzw. eines diesen umgebenden Toleranzfeldes mit einem Abstand in der Größenordnung von etwa 10 cm wird durch ein konstantes Licht, alternativ durch ein Ausschalten der Lampe 18, angezeigt.

Wie Fig.1 weiter zu entnehmen ist, sind im Umfeld des Displays 15 Bedienelemente 19a bzw. 19b vorgesehen, mit denen die Sende- und Empfangseinheit 4 ein- und ausgeschaltet werden kann bzw. die Beendigung einer Absteckung eingegeben werden kann, um diese Informationen an den Aufstellort des Tachymeters zu übertragen.

Ist ein Zielpunkt O im Umfeld des abzusteckenden Geländepunktes P aufgefunden worden, so wird die Absteckvorrichtung 1 an dem Zielpunkt O exakt aufgestellt. Anschließend erfolgt eine genaue Anzielung und Messung vom Tachymeter aus. Dort werden die Lagekorrekturinformationen in Form orthogonaler oder auch polarer Daten ermittelt. Diese sowie zusätzliche Richtungsinformationen werden dann an die Absteckvorrichtung 1 per Funk übertragen, wobei Funkbereiche von 100 MHz bis 5 GHz verwendet werden können. Die Anzeige dieser Informationen erfolgt auf dem Display 15. Bei herkömmlichen Absteckvorrichtungen müßten nun die erhaltenen Lagekorrekturinformationen von dem Zielpunkt O ausgehend abgemessen und manuell in das Gelände übertragen werden, um zu dem abzusteckenden Geländepunkt P zu gelangen.

Bei der Absteckvorrichtung 1 nach dem ersten Ausführungsbeispiel wird jedoch erfindungsgemäß, wie bereits erläutert, die Lagekorrekturinformation in ein in das Gelände projiziertes Gitter G umgesetzt, so daß ein manueller Abmeßvorgang entfallen kann. Vielmehr kann anhand des Gitters G, in der Regel anhand der Gittermitte, der abzusteckende Geländepunkt P im Gelände unmittelbar bestimmt und sofort markiert werden.

Gegebenenfalls erfolgt anschließend noch eine Kontrollmessung, bei der die Absteckvorrichtung 1 in dem aufgefundenen und abgesteckten Geländepunkt P aufgestellt wird, wobei die Beendigung der Kontrollmessung über das Display 1 5 signalisiert wird. Nach Beendigung der Absteckung können unmittelbar die abzuschreitenden Distanzen für einen weiteren projektierten, abzusteckenden Geländepunkt auf dem Display 15 angegeben werden.

Zur Erleichterung des Transportes und der Aufbewahrung ist die Absteckvorrichtung 1 zerlegbar ausgebildet, wobei die empfindlichen Bauteile enthaltende Sende- und Empfangseinheit 4 von dem Stab 2 abgenommen werden kann. Sofern zwischen dieser und der Absteckhilfseinrichtung 5 ein drahtloser Informationsaustausch eingerichtet wird, beispielsweise über Funk oder Infrarot oder auch Ultraschall, läßt sich die Absteckvorrichtung 1 auch mit abgekoppelter Sende- und Bedieneinheit 4 betreiben.

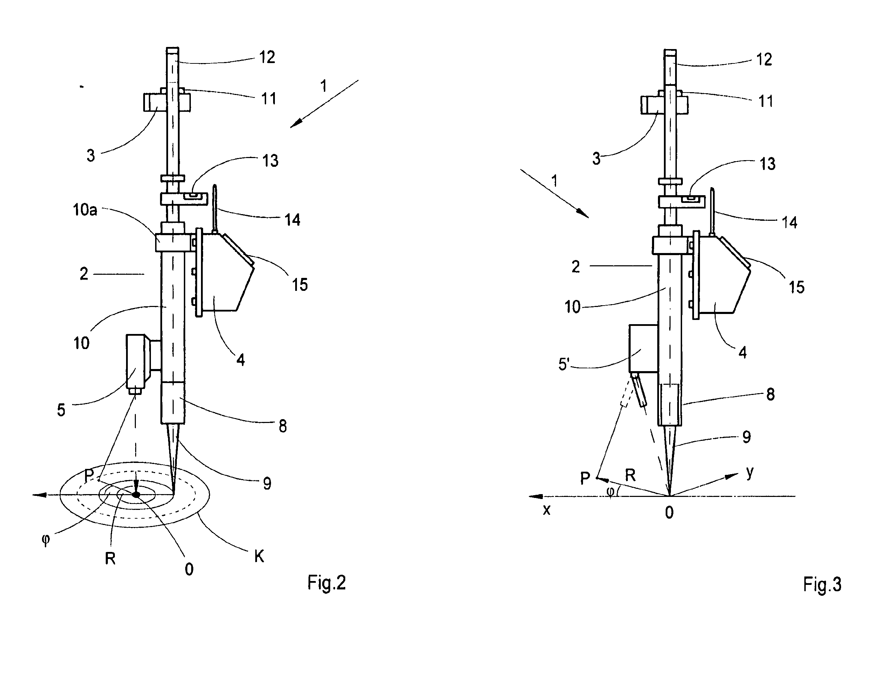

Das zweite Ausführungsbeispiel in Fig.2 unterscheidet sich von dem ersten Ausführungsbeispiel lediglich durch die Verwendung eines Projektionsmusters in Form von um den abzusteckenden Geländepunkt P angeordneten, konzentrischen Kreisen K, das sich besonders für eine Vermessung auf der Basis von Polarkoordinaten eignet.

Ein drittes Ausführungsbeispiel ist in Fig.3 dargestellt, bei dem im Unterschied zu den vorgenannten Ausführungsbeispielen ein in zwei Koordinaten X,Y gesteuerter Laserpointer als Absteckhilfseinrichtung 5' verwendet wird, die wie in den beiden zuvor genannten Ausführungsbeispielen in definierter und bekannter Lage zu dem Reflektor 3 angeordnet ist. Die Kennzeichnung des abzusteckendes Geländepunktes P im Gelände erfolgt dabei durch einen punktförmigen Lichtfleck.

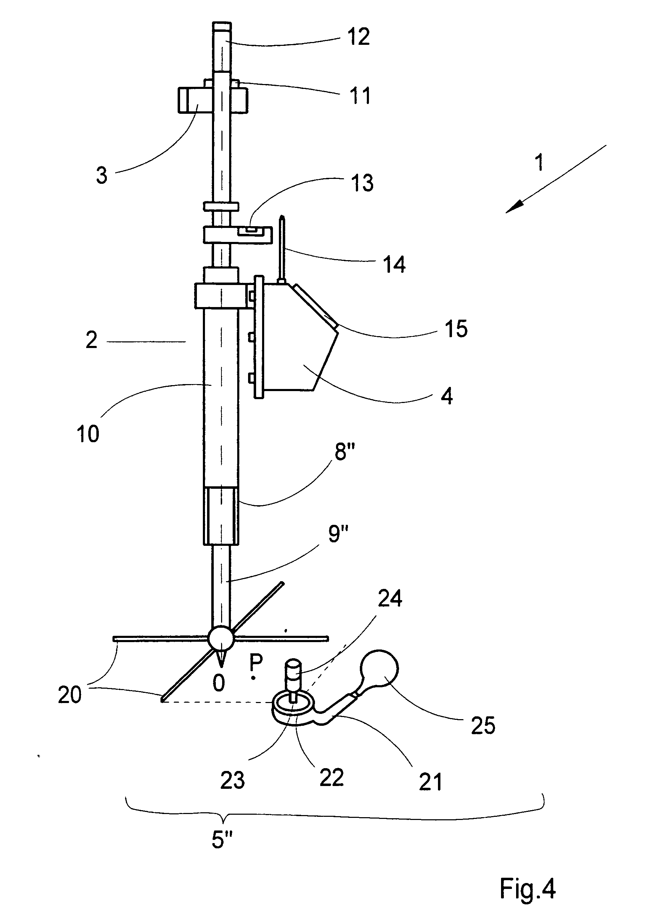

Ein weiteres Ausführungsbeispiel ist in Fig.4 dargestellt. Dieses entspricht in bezug auf den Stab 2, den Reflektor 3 sowie die Sende- und Empfangseinheit 4 den zuvor genannten Ausführungsbeispielen, so daß im folgenden lediglich kurz auf die Unterschiede zu diesen eingegangen wird. In Fig.4 ist die Absteckhilfseinrichtung 5" lediglich teilweise an dem Stab 2 angebracht. Dieser weist ein Bodenstück 8'' auf, das in definierter Lagezuordnung an dem Stabteil 10 ankoppelbar ist. Das Bodenstück 8'' ist im Bereich seiner Spitze 9'' mit einem-Sendemodul 20 versehen, das mit einem von dem Stab 2 separaten Empfangsmodul 21 zusammenwirkt, um eine Ortung des abzusteckenden Geländepunktes P im Verhältnis zu dem Zielpunkt O über elektromagnetische Wellen oder Ultraschall zu ermöglichen, wobei letzteres bei dem Ausführungsbeispiel zur Anwendung kommt.

Das Sendemodul 20 umfaßt vier gleichbeabstandete, sich von der Spitze 9" erstreckende Koordinatenarme von etwa 200 mm Länge, die an einer zentralen Kugel angelenkt sind und bei Bedarf gegen den Träger 2 hochgeklappt werden können.

Das Empfangsmodul 21 ist als von Hand bewegbare, dreidimensionale Maus ausgebildet, die einen entsprechenden Sensor 22 trägt, mit Hilfe dessen eine Markierung des zu ortenden Geländepunktes P aufgefunden werden kann. Über einen an dem Empfangsmodul 21 vorgesehenen Referenzpunkt 23 erfolgt dann eine den abzusteckenden Geländepunkt P repräsentierende Kennzeichnung im Gelände. Um gleichzeitig eine dauerhafte Markierung zu ermöglichen, ist an dem Empfangsmodul 21 weiterhin ein Farbvorrat 24 sowie eine Betätigungsvorrichtung 25 zum Erzeugen eines Farbpunktes im Gelände vorgesehen, die zusammen eine Farbspritze bzw. einem Farbpointer bilden.

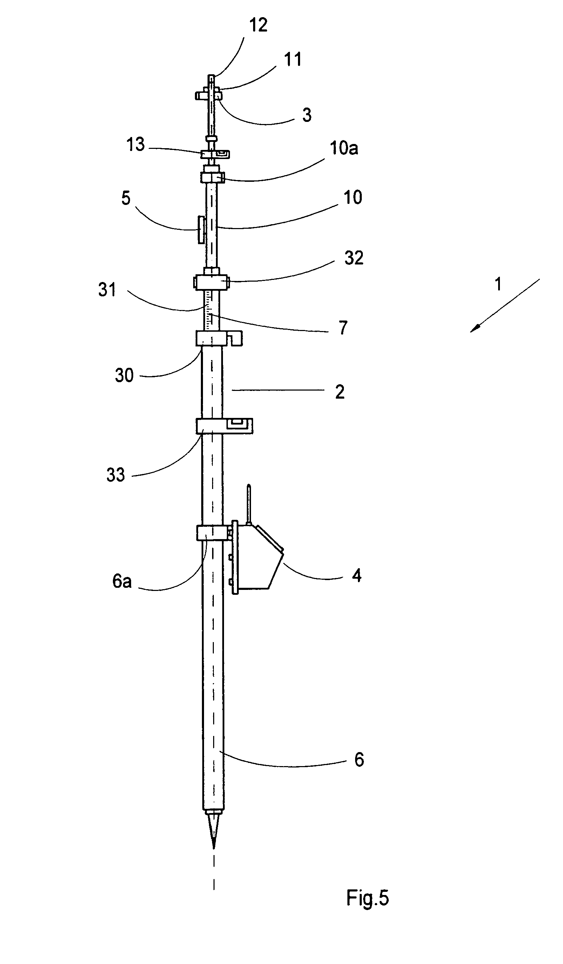

Ein weiteres, fünftes Ausführungsbeispiel, ist in Fig.5 dargestellt. Bei diesem ist der Stab 2 teleskopierbar ausgebildet. In einen bodenseitigen Teil 6 ist ein nach oben ausfahrbarer Teil 7 eingesteckt, der den Reflektor 3 trägt. Der ausfahrbare Teil 7 kann gegenüber dem bodenseitigen Teil 6 verrastet werden. Hierzu ist eine geeignete Klemmvorrichtung 30 am oberen Ende des bodenseitigen Teiles 6 angebracht. Zur Ermittlung der Auszugslänge, die für die Bestimmung der Höhe des Reflektors 3 über einem Aufstellpunkt benötigt wird, ist an dem ausfahrbaren Teil 7 ein Maßstab 31 angebracht. Ein zu tiefes Einfahren des ausfahrbaren Teiles 7 in das bodenseitige Teil 6 wird durch eine Rast 32 vermieden.

An den ausfahrbaren Teil 7 ist am oberen Ende eine Reflektoranordnung vorgesehen, die entsprechend dem Stabteil 10 des ersten Ausführungsbeispieles ausgebildet ist. In einer besonderen Variante kann das Stabteil 10 des ersten Ausführungsbeispieles in definierter Lagezuordnung an das obere Ende des ausfahrbaren Teiles 7 angekoppelt werden. Dementsprechend sind an dem Stabteil 10 wiederum ein Reflektor 3 mit einem Diopter 11 und einem Griff 12 vorgesehen. Weiterhin ist in Fig.5 eine Dosenlibelle 13, eine Anschlußvorrichtung 10a für eine Sende- und Empfangseinheit 4 sowie eine Absteckhilfseinrichtung 5" vorgesehen.

In dem in Fig.5 dargestelltem Ausführungsbeispiel befindet sich die Sende- und Empfangseinheit 4 jedoch an dem bodenseitigen Teil 6, das hierzu ebenfalls eine geeignete Haltevorrichtung 6a aufweist. Wie in den zuvor genannten Ausführungsbeispielen ist auch hier die Sende- und Empfangseinheit 4 lösbar angekoppelt.

Die Anordnung an dem bodenseitigen Teil 6 erlaubt eine Höhenunabhängigkeit der Sende- und Empfangseinheit 4, so daß diese selbst dann leicht abgelesen werden kann, wenn der Reflektor 3 an dem ausfahrbaren Teil 7 weit nach oben auszogen ist.

Aus demselben Grunde ist an das bodenseitige Teil 6 eine weitere Dosenlibelle 33 kurz oberhalb der Sende- und Empfangseinheit 4 angebracht, so daß eine lotrechte Ausrichtung der in Fig.5 dargestellten Absteckvorrichtung 1 auch in einem voll ausgefahrenen Zustand gut kontrolliert werden kann. Zur Bestimmung der Höhe des Reflektors über dem Boden sind in der Absteckvorrichtung 1 Mittel zur Erfassung der Lagezuordnung zwischen dem ausfahrbaren Teil 7 und bodenseitigem Teil 6 vorgesehen. Die entsprechenden Informationen können über die Sende- und Empfangseinheit 4 an das Tachymeter übermittelt werden. Um bei einer Informationsübertragung über Leuchtdioden zu dem Tachymeter die optische Verbindung zu gewährleisten, ist der ausfahrbare Teil 7 an den bodenseitigen Teil derart geführt, daß der Reflektor 3 stets mit der Sende- und Empfangseinheit 4 fluchtet.

## Patentansprüche

1. Absteckvorrichtung für Tachymeter, umfassend
- einen auf einen Zielpunkt (O) im Umfeld eines abzusteckenden Geländepunktes (P) lotrecht aufsetzbaren Stab (2),
- einen an dem Stab (2) angeordneten Reflektor (3) zur tachymetrischen Erfassung des Zielpunktes (O),
- eine Sende- und Empfangseinrichtung (4) zum Austausch von Informationen mit dem Tachymeter,
- eine Rechenschaltung zur Ermittlung von Positionsabweichungen zwischen Zielpunkt (O) und Geländepunkt (P) und
- eine Absteckhilfseinrichtung (5,5',5") zur Kennzeichnung der Position des abzusteckenden Geländepunktes (P),
**dadurch gekennzeichnet, daß**
- die Abstecksteckhilfseinrichtung (5) ein Lasergerät umfaßt, in dem ein diffraktives optisches Element zur Erzeugung eines auf das Umfeld des Zielpunktes (O) gerichteten Lichtmusters in Form eines Gitters, eines Punkterasters und/oder konzentrischer Kreise vorgesehen ist.

2. Absteckvorrichtung nach Anspruch 1, **dadurch gekennzeichnet, daß** die Sende- und Empfangseinheit (4) lösbar an dem Träger (2) angekoppelt ist.

3. Absteckvorrichtung nach einem der vorgenannten Ansprüche, **dadurch gekennzeichnet, daß** die Sende- und Empfangseinheit (4) ein Display (15) zur Anzeige von Informationen aufweist.

4. Absteckvorrichtung nach einem der vorgenannten Ansprüche, **dadurch gekennzeichnet, daß** die Sende- und Empfangseinheit (4) eine Bedieneinrichtungen (16,1 9a,19b) zur Eingabe von Informationen aufweist.

5. Absteckvorrichtung nach einem der vorgenannten Ansprüche, **dadurch gekennzeichnet, daß** der Stab (2) einen bodenseitigen Teil (6) und einen vertikal nach oben ausfahrbaren Teil (7) aufweist, wobei der Reflektor (3) an dem ausfahrbaren Teil (7) angeordnet ist und der ausfahrbare Teil (7) in definierter Lagezuordnung zu dem bodenseitigen Teil (6) geführt ist.

6. Absteckvorrichtung nach Anspruch 9 5, **dadurch gekennzeichnet, daß** die Sende- und Empfangseinheit (4) an dem ausfahrbaren Teil (7) befestigbar ist und Mittel zur Erfassung der Lagezuordnung zwischen dem ausfahrbaren Teil (7) und dem bodenseitigen Teil (6) vorgesehen sind.

7. Absteckvorrichtung nach einem der Ansprüche 3 bis 6, **dadurch gekennzeichnet, daß** das Display (15) zur Anzeige von Informationen zur Grobeinweisung des Stabes (2) im Umfeld des abzusteckenden Geländepunktes (P) ausgebildet ist.

8. Absteckvorrichtung nach Anspruch 7, **dadurch gekennzeichnet, daß** eine Richtungseinweisung mit Hilfe eines an dem Display (1 5) angezeigten, ein- und ausschaltbaren Positionssignals (1 7a, 17b) erfolgt.

9. Absteckvorrichtung nach Anspruch 7 oder 8, **dadurch gekennzeichnet, daß** an dem Display (1 5) eine Entfernungseinweisung durch ein Blinklicht (18) mit variabler Blinkfrequenz angeordnet ist, wobei eine zu große Entfernung, eine richtige Entfernung und eine zu geringe Entfernung durch unterschiedliche Blinkfrequenzen signalisiert werden.

## Claims

1. A staking out device for use with at least one tachymeter comprising:
- a rod (2) which can be set vertically on a target point (O) in the area surrounding a terrain point (P) to be staked out;
- a reflector (3) which is arranged on the rod (2) for tachymetric detection of the target point (O) by the tachymeter;
- a transmitting and receiving device (4) for exchanging information with the tachymeter;
- a computing circuit for determining deviations in position between the target point (O) and the terrain point (P); and
- an auxiliary staking out device (5, 5', 5") for marking the position of the terrain point (P) to be staked out,
**characterised in that** the auxiliary staking out device (5) comprises a laser device which is provided with a diffractive optical element for generating a light pattern directed to the area surrounding the target point (O) in the form of a grid, a point raster and/or concentric circles.

2. The staking out device according to claim 1, **characterised in that** the transmitting and receiving unit (4) is coupled to the rod (2) in a detachable manner.

3. The staking out device according to any one of the preceding claims, **characterised in that** the transmitting and receiving device (4) has a display (15) for displaying information.

4. The staking out device according to any one of the preceding claims, **characterised in that** the transmitting and receiving unit (4) has an operator's control (16, 19a, 19b) for entering information.

5. The staking out device according to any one of the preceding claims, **characterised in that** the rod (2) has a ground-side part (6) and a part (7) which can telescope vertically upward, the reflector (3) being arranged at the telescoping part (7), and the telescoping part (7) being guided in a defined position allocation relative to the ground-side part (6).

6. The staking out device according to claim 5, **characterised in that** the transmitting and receiving unit (4) can be fastened to the telescoping part (7), and means are provided for detecting the position correlation between the telescoping part and the ground-side part (6).

7. The staking out device according to any one of claims 3 to 6, **characterised in that** the display (15) is constructed for displaying information for the coarse orientation of the rod (2) in the area surrounding the terrain point (P) to be staked out.

8. The staking out device according to claim 7, **characterised in that** direction orientation is carried out by a position signal (17a, 17b) which is displayed on the display (15) and which can be turned on and off.

9. The staking out device according to claim 7 or 8, **characterised in that** distance orientation is arranged at the display (15) by a blinking light (18) with variable blinking frequency, wherein different blinking frequencies signal too great a distance, a correct distance, and too little distance.

## Revendications

1. Dispositif de jalonnement pour tachymètre, comportant
- un jalon (2) pouvant être posé à plomb sur un point cible (O) dans le champ d'un point de terrain (P) à jalonner,
- un réflecteur (3) monté sur le jalon (2) pour l'enregistrement tachymétrique du point cible (O),
- un dispositif d'émission et de réception (4) pour échanger des informations avec le tachymètre,
- un composant de calcul pour déterminer les écarts de position entre le point cible (O) et le point de terrain (P), et
- un dispositif auxiliaire de jalonnement (5, 5', 5") pour identifier la position du point de terrain (P) à jalonner,
**caractérisé en ce que**
- le dispositif auxiliaire de jalonnement (5) est un appareil à laser, dans lequel est prévu un élément optique de diffraction destiné à générer un modèle de lumière, dirigé sur le champ du point cible (O) et réalisé sous la forme d'une grille, d'un réseau de points et/ou de cercles concentriques.

2. Dispositif de jalonnement selon la revendication 1, **caractérisé en ce que** le dispositif d'émission et de réception (4) est monté de manière amovible sur le support (2).

3. Dispositif de jalonnement selon l'une quelconque des revendications précédentes, **caractérisé en ce que** le dispositif d'émission et de réception (4) comporte un afficheur (15) destiné à afficher des informations.

4. Dispositif de jalonnement selon l'une quelconque des revendications précédentes, **caractérisé en ce que** le dispositif d'émission et de réception (4) comporte un dispositif de commande (16, 19a, 19b) destiné à entrer des informations.

5. Dispositif de jalonnement selon l'une quelconque des revendications précédentes, **caractérisé en ce que** le jalon (2) comporte une partie (6) du côté sol et une partie (7) extractible verticalement vers le haut, le réflecteur (3) étant monté sur la partie (7) extractible et la partie (7) extractible étant guidée dans une association de position par rapport à la partie (6) du côté sol.

6. Dispositif de jalonnement selon la revendication 5, **caractérisé en ce que** le dispositif d'émission et de réception (4) peut être fixé contre la partie (7) extractible et il est prévu des moyens destinés à déterminer l'association de position entre la partie (7) extractible et la partie (6) du côté sol.

7. Dispositif de jalonnement selon l'une quelconque des revendications 3 à 6, **caractérisé en ce que** l'afficheur (15), destiné à afficher des informations, est conçu pour une signalisation approximative du jalon (2) dans le champ du point de terrain (P) à jalonner.

8. Dispositif de jalonnement selon la revendication 7, **caractérisé en ce qu'**une signalisation de direction est effectuée au moyen d'un signal de position (17a, 17b) affiché sur l'afficheur (15) et pouvant être activé et désactivé.

9. Dispositif de jalonnement selon la revendication 7 ou 8,
**caractérisé en ce qu'**une signalisation d'éloignement sur l'afficheur (15) est formée par une lumière clignotante (18) avec une fréquence de clignotement variable, un éloignement trop grand, un éloignement correct et un éloignement trop faible étant signalés par des fréquences de clignotement différentes.
